**Europäisches Patentamt**

**European Patent Office**

**Office européen des brevets**

(19)

(11) Veröffentlichungsnummer: **0 196 527**
**A2**

(12) ## EUROPÄISCHE PATENTANMELDUNG

(21) Anmeldenummer: **86103512.9**

(22) Anmeldetag: **15.03.86**

(51) Int. Cl.⁴: **H04Q 11/04** , H04M 11/06

(30) Priorität: **23.03.85 DE 3510567**

(43) Veröffentlichungstag der Anmeldung:
**08.10.86 Patentblatt 86/41**

(84) Benannte Vertragsstaaten:
**AT DE FR GB NL**

(71) Anmelder: **International Standard Electric**
**Corporation**
**320 Park Avenue**
**New York New York 10022(US)**
Anmelder: **Standard Elektrik Lorenz**
**Aktiengesellschaft**
**Lorenzstrasse 10**
**D-7000 Stuttgart 40(DE)**

(72) Erfinder: **Böttle, Dietrich**
**Buchenweg 14**
**D-7335 Salach(DE)**

(74) Vertreter: **Villinger, Bernhard, Dipl.-Ing. et al**
**Standard Elektrik Lorenz AG Patent- und**
**Lizenzwesen Postfach 300 929 Kurze Strasse 8**
**D-7000 Stuttgart 30(DE)**

(54) **Verteileinrichtung für digitalisierte Fernsehsignale.**

(57) Eine Verteileinrichtung für digitalisierte Fernsehsignale mit einem Raumkoppelfeld wird erfindungsgemäß zur Verteilung oder zur Vermittlung andersartiger Signale mit herangezogen.

FIG.1

EP 0 196 527 A2

Verteileinrichtung für digitalisierte Fernsehsignale

Die Erfindung betrifft eine Verteileinrichtung für digitalisierte Fernsehsignale nach dem Oberbegriff des Patentanspruchs.

Eine derartige Verteileinrichtung wird in dem Artikel "Vermittlung von 140-Mbit/s-Signalen in Breitbandkommunikationssystemen"von D.Böttle im Elektrischen Nachrichtenwesen, Band 58, Nr. 4, 1984, S. 450 ff, erwähnt.

Der Erfindung liegt die Aufgabe zugrunde,eine derartige Verteileinrichtung für vorteilhafte Anwendungen auszugestalten.

Diese Aufgabe wird erfindungsgemäß gelöst durch die Lehre des Patentanspruchs. Solche andersartigen Signalquellen können beispielsweise Quellen andersartiger Verteildienste, vorzugsweise Hörfunkprogramme, oder auch Einrichtungen von Dialogdiensten, beispielsweise für das Bildfernsprechen, sein. Eine solche gemischte Beschaltung der Eingänge des Koppelfelds ist vor allem dann von Vorteil, wenn während einer Übergangs-oder Einführungsphase zumindest ein Teil der angebotenen Dienste nur von wenigen Teilnehmern genützt wird. Es kann dann durchaus von Vorteil sein, auch die schmalbandigeren Signale von Hörfunkprogrammen über das für Fernsehsignale ausgelegte Koppelfeld zu verteilen. Bei einem späteren Ausbau der Verteileinrichtung können dann die zunächst für die Verteilung der schmalbandigen Dienste eingesetzten Baugruppen für die Verteilung von Fernsehprogrammen mitverwendet werden, während ein separates Koppelfeld für die - schmalbandigen Signale erst in einer späteren Ausbaustufe erforderlich ist. Das gleiche gilt, wenn im Bereich dieser Verteileinrichtung auch Bildfernsprechteilnehmer anzuschließen sind. Die von den Bildfernsprechteilnehmern kommenden Signale werden an weitere Eingänge des Koppelfelds geführt. Die zu den Bildfernsprechteilnehmern gehenden Signale werden an Ausgängen der Verteileinrichtung abgenommen. Zusätzlich müssen dann weitere Eingänge und weitere Ausgänge mit Verbindungsleitungen von und zu Bildfernsprechvermittlungen oder weiteren gleichartigen Verteileinrichtungen belegt werden. Bei steigender Zahl der Bildfernsprechteilnehmer kann ein weiteres, gleichartiges Koppelfeld hinzukommen, das mehr Eingänge als Ausgänge aufweist, und so als Konzentrator wirkt und das zur Konzentration der von den Bildfernsprechteilnehmern kommenden Leitungswege verwendet wird. Die Ausgänge dieses zusätzlichen Koppelfelds werden dann mit weiteren Eingängen des ersten Koppelfelds verbunden. Auch die Baugruppen dieses zweiten Koppelfeldes können bei einem späteren Ausbau zur Erweiterung der Verteilmöglichkeiten für Fernsehprogramme mitverwendet werden.

Weitere erfindungsgemäße Ausgestaltungen einer gattungsgemäßen Verteileinrichtung können den folgenden Ausführungsbeispielen entnommen werden.

Im folgenden wird die Erfindung anhand von Ausführungsbeispielen unter Zuhilfenahme der beiliegenden Zeichnung weiter erläutert.

Figur 1 zeigt eine erfindungsgemäß ausgebaute Verteileinrichtung.

Figur 2 zeigt das Blockschaltbild (Figur 2a) und ein Symbol (Figur 2b) eines in einer erfindungsgemäßen Verteileinrichtung eingesetzten Koppelfeldbausteins.

Figur 3 zeigt ein Koppelfeld in einer erfindungsgemäßen Verteileinrichtung.

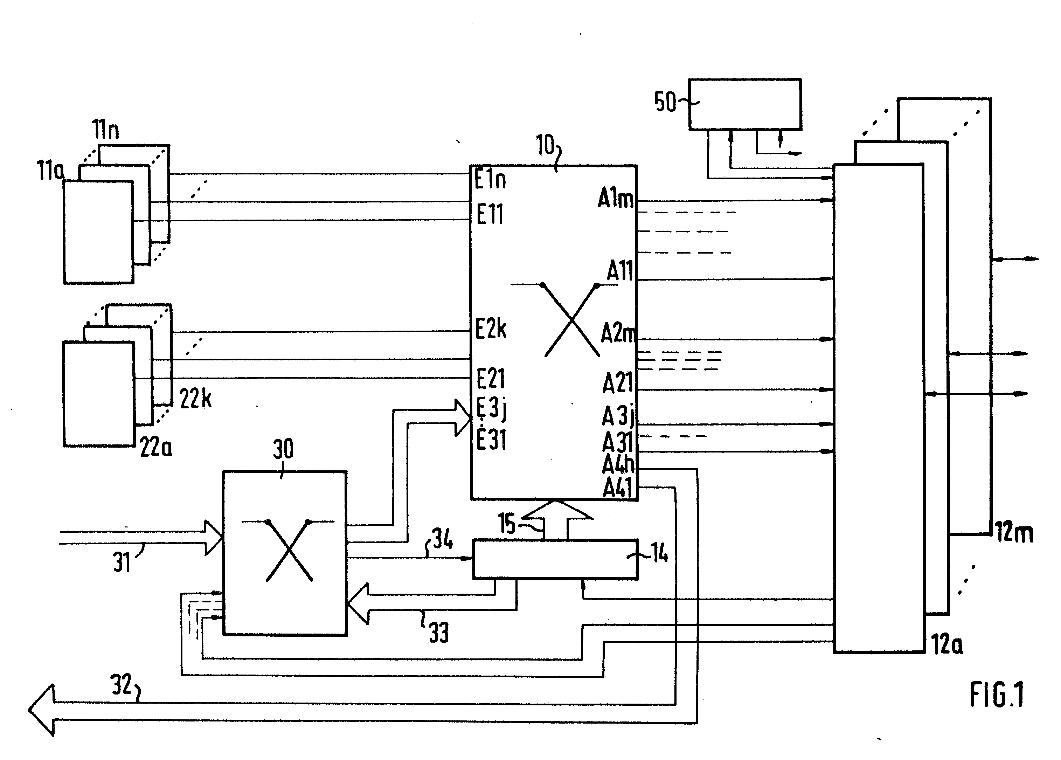

Die in Figur 1 gezeigte erfindungsgemäße Verteileinrichtung wird nun zunächst so weit beschrieben, wie sie bereits aus dem Stand der Technik bekannt ist:

Kern der Verteileinrichtung ist ein breitbandiges Koppelfeld 10, das als Raumkoppelfeld aufgebaut ist. Es weist eine Reihe von Eingängen E11 bis E1n und eine Reihe von Ausgängen A11 bis A1m auf. Das Koppelfeld 10 ist so aufgebaut, daß alle Ausgänge A11 bis A1m gleichzeitig mit je einem beliebigen Eingang E11 bis E1n verbunden sein können. Es ist dabei möglich, daß mehrere Ausgänge gleichzeitig mit demselben Eingang verbunden sind. An jeden der Eingänge E11 bis E1n ist der Ausgang einer Fernsehprogrammquelle 11a bis 11n angeschlossen. Als Fernseh programmquelle wird hier jede Einrichtung angesehen, an deren Ausgang ein digitalisiertes Fernsehsignal abgegeben werden kann. Als Fernsehsignal wird jedes Videosignal mit zugehörigem Tonsignal angesehen, das für die öffentliche Verteilung vorgesehen ist. Für jeden der an der Verteileinrichtung angeschlossenen Teilnehmer ist eine Teilnehmeranschlußeinheit 12a bis 12m vorhanden. Jede dieser Teilnehmeranschlußeinheiten 12a bis 12m ist mit einem Eingang an den entsprechenden Ausgang A11 bis A1m des Koppelfelds 10 angeschlossen. Weiter ist eine Steuereinheit 14 vorhanden, die über einen Steuerbus 15 die einzelnen Koppelpunkte des Koppelfelds 10 entsprechend den von den einzelnen Teilnehmern übermittelten Programmwünschen ansteuert. Sie ist hierzu mit je einem Steuerausgang der einzelnen Teilnehmeranschlußeinheiten 12a bis 12m verbunden. Die Teilnehmeranschlußeinheiten 12a bis 12m sind jeweils über einen bidirektionalen Übertragungsweg mit den einzelnen Teilnehmern verbunden. In der Richtung von der Verteileinrichtung zum Teilnehmer wird jeweils (mindestens) das ausgewählte Fernsehprogramm übertragen, in der Gegenrichtung vom Teilnehmer zur Verteilenrichtung werden (mindestens) die Signale zur Auswahl des gewünschten Programms übertragen.

Weiter ist es aus dem Stand der Technik bekannt, daß die Teilnehmeranschlußeinheiten 12a bis 12m in der einen und/oder anderen Richtung mit weiteren Einrichtungen 50 verbunden sind. Solche weiteren Einrichtungen sind beispielsweise Fernsprechvermittlungen, Bildfernsprechvermittlungen und Hörfunkprogrammquellen.

Die erfindungsgemäße Ausgestaltung dieser Verteileinrichtung wird nun ebenfalls anhand der Figur 1 beschrieben:

Erfindungsgemäß weist das Koppelfeld 10 weitere Eingänge auf, an denen andersartige Signalquellen angeschlossen sind. Für eine Verteileinrichtung naheliegend ist beispielsweise die gleichzeitige Verteilung von Hörfunkprogrammen. Im gezeigten Beispiel sind hierfür mehrere Hörfunkprogrammquellen 22a bis 22k über weitere Eingänge E21 bis E2k an das Koppelfeld 10 angeschlossen. Im einfachsten Fall können die Hörfunkprogramme von den einzelnen Teilnehmern über die ohnehin vorhandenen Ausgänge A11 bis A1m abgerufen werden. Jeder Teilnehmer kann dann zwischen dem Empfang eines Hörfunkprogramms und dem Empfang eines Fernsehprogramms umschalten. Da aber die Übertragung eines Hörfunkprogramms und eines Fernsehprogramms auf derselben Leitung zum Teilnehmer ohne weiteres möglich ist, ist im in Figur 1 gezeigten Beispiel für jeden Teilnehmer ein weiterer Ausgang A21 bis A2m vorhanden. Auch diese Ausgänge werden über je einen weiteren Eingang der Teilnehmeranschlußeinheiten 12a bis 12m diesem zugeführt. In jeder Teilnehmeranschlußeinheit 12a bis 12m muß dann ein Dienstemultiplexer vorhanden sein,der die von der ausgewählten Fernsehprogrammquelle und der

ausgewählten Hörfunkprogrammquelle kommenden Signale und gegebenenfalls weitere, von weiteren Einrichtungen 50 kommende Signale zu einem gemeinsamen, zum Teilnehmer gehenden Signal vereinigt.

Das Koppelfeld 10 kann auch als Vermittlung für Bildfernsprechteilnehmer mit verwendet werden. Hierzu werden die von den angeschlossenen Bildfernsprechteilnehmern und von anderen der Vermittlung von Bildferngesprächen dienenden Einrichtungen kommenden Leitungen direkt oder indirekt auf weitere Eingänge E31 bis E3j des Koppelfelds 10 geschaltet. Auch in diesem Fall ist es möglich, die zu den Bildfernsprechteilnehmern gehenden Leitungen über diejenigen der Ausgänge A11 bis A1m zu führen, die Teilnehmern mit Bildfernsprecheinrichtungen zugeordnet sind. Die Umschaltung müßte dann wieder beim Teilnehmer erfolgen. Im gezeigten Beispiel sind hierfür aber weitere Ausgänge A31 bis A3i am Koppelfeld 10 vorgesehen. Über weitere Ausgänge A41 bis A4h und ein abgehendes Fernleitungsbündel 32 ist eine entfernte Bildfernsprechvermittlung angeschlossen. In dem in Figur 1 gezeigten Beispiel werden die von den Bildfernsprechteilnehmern und die über ein ankommendes Fernleitungsbündel 31 kommenden Bildferngespräche einem Konzentrator 30 zugeführt. Der Konzentrator 30 ist ein Koppelfeld, das aus den gleichen Baugruppen aufgebaut ist, wie das Koppelfeld 10, bei dem jedoch, im Gegensatz zum Koppelfeld 10, die Zahl der Eingänge größer ist als die Zahl der Ausgänge. Auch der Konzentrator 30 wird, über einen weiteren Steuerbus 33, von der Steuereinheit 14 aus gesteuert. Die für die Steuerung erforderlichen Daten der über das ankommende Fernleitungsbündel 31 führenden Bildferngespräche wird der Steuereinheit 14 über einen Signalisierungskanal 34 vom Konzentrator 30 aus zugeführt.

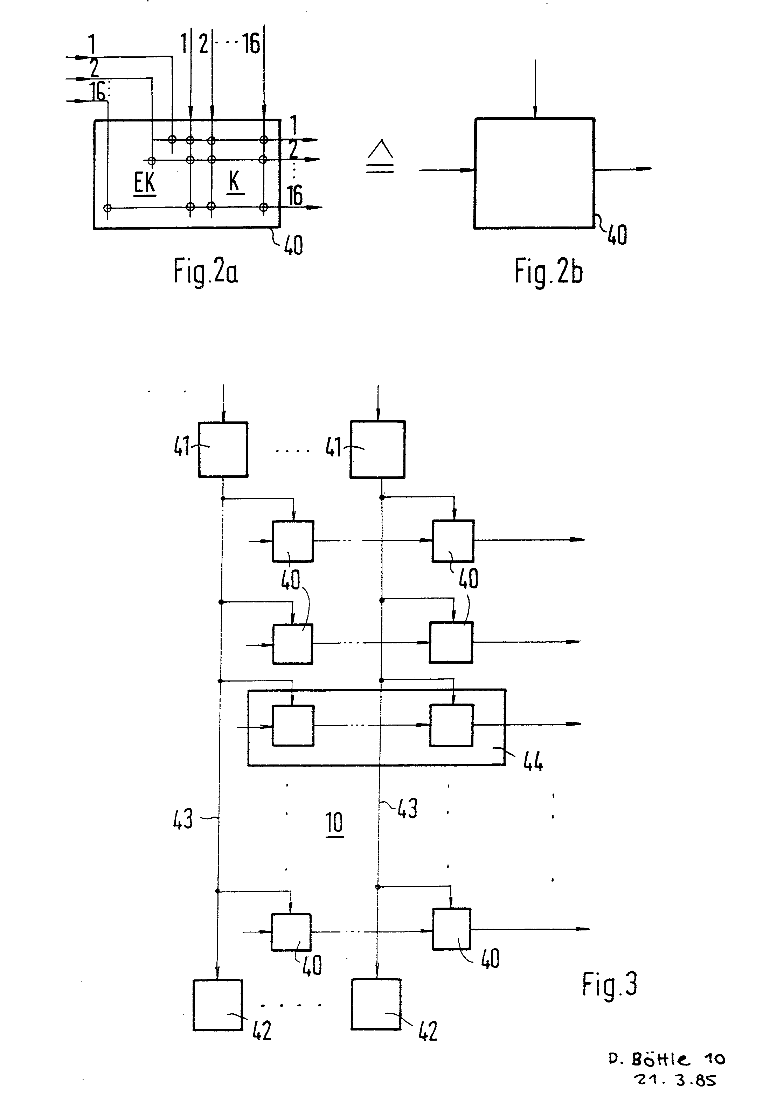

Figur 2a zeigt einen Koppelfeldbaustein 40, der die Grundlage sowohl des Koppelfelds 10, als auch des Konzentrators 30 bildet. Der Koppelfeldbaustein 40 weist 16 Eingänge und 16 Ausgänge auf. Eine Koppelfeldmatrix K erlaubt Verbindungen von jedem Eingang zu jedem Ausgang . Durch de Steuerung ist sichergestellt, daß an jeden Ausgang nur ein Eingang durchgeschaltet werden kann. Dagegen ist nichtausgeschlossen, daß von einem Eingang zu mehreren Ausgängen Verbindungen durchgeschaltet werden. Weiter weist der Koppelfeldbaustein 40 16 Ergänzungseingänge auf, wobei jeder Eingang einem Ausgang zugeordnet ist. Über eine Ergänzungskoppelfeldmatrix EK ist die Durchschaltung zwischen einem Ergänzungseingang und dem zugeordneten Ausgang möglich.

Figur 2b zeigt ein Symbol, durch das der anhand der Figur 2a beschriebene Koppelfeldbaustein 40 in der folgenden Figur 3 dargestellt wird.

Figur 3 zeigt einen vorteilhaften Aufbau eines Koppelfelds in einer Breitbandverteileinrichtung, insbesondere des Koppelfelds 10 der erfindungsgemäßen Verteileinrichtung nach Figur 1. Im einfachsten Fall besteht das Koppelfeld 10 aus einem Bustreiber 41, einem Busabschluß 42, einem dazwischenliegenden Bus 43 und einer Mehrzahl von Koppelfeldbausteinen 40, deren Eingänge an den Bus 43 angeschlossen sind Die Erweiterungseingänge dieser Koppelfeldbausteine sind unbeschaltet. Zur Erweiterung kann eine weitere derartige Konfiguration verwendet werden, wobei nun die Ergänzungseingänge der einzelnen Koppelfeldbausteine 40 an die entsprechenden Ausgänge der vorangehenden Koppelfeldbausteine angeschlossen werden. Dieses Koppelfeld kann in jeder Richtung, d.h. sowohl bezüglich der Eingänge, als auch der Ausgänge, beliebig erweitert werden. Eine Gruppe von Koppelfeldbausteinen 40, bei der jeweils die Ausgänge eines Koppelfeldbausteins mit den Ergänzungseingängen des nächsten Koppelfeldbausteins verbunden sind, kann als Konzentratorbaugruppe 44 zusammengefaßt werden. Der Konzentrator 30 ist im einfachsten Fall gleich einer solchen Konzentratorbaugruppe 44.

**Ansprüche**

Verteileinrichtung für digitalisierte Fernsehsignale, mit einem Raumkoppelfeld mit n Eingängen und m Ausgängen, bei dem jeder der m Ausgänge jederzeit mit einem beliebigen der n Eingänge verbunden werden kann, mit n Fernsehprogrammquellen, deren Ausgänge mit je einem der n Eingänge des Raumkoppelfelds verbunden sind, mit m teilnehmerindividuellen Anschlußeinheten, die mit je einem Eingang an einen der m Ausgänge des Raumkoppelfelds angeschlossen sind, **dadurch gekennzeichnet**, daß das Raumkoppelfeld (10) weitere Eingänge (E21 ... E2k, E31 ... E3j) aufweist, an denen andersartige Signalquellen (22a ... 22k, 30) angeschlossen sind.

FIG.1

0 196 527

Fig.2a

Fig.2b

10

43

44

43

41    . . . .    41

40    40

40    40

40    40

42    . . . . .    42

Fig.3

D. Böttle 10
21. 3.85